(19) Europäisches Patentamt
European Patent Office
Office européen des brevets

(11) EP 3 923 210 A1

(12) EUROPEAN PATENT APPLICATION

(43) Date of publication:
15.12.2021 Bulletin 2021/50

(51) Int Cl.:
*G06N 5/00* (2006.01)        *G06N 20/10* (2019.01)

(21) Application number: 21177118.3

(22) Date of filing: 01.06.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.06.2020 US 202063033046 P

(71) Applicant: Replica Analytics
Ottawa, Ontario K1P 5J6 (CA)

(72) Inventors:
• EL EMAM, Khaled
Ottawa, K1H 8L1 (CA)
• MOSQUERA, Lucy
Ottawa, K1P 5J6 (CA)
• ZHENG, Chaoyi
Ottawa, K1P 5J6 (CA)

(74) Representative: Cobbold, Alistair John et al
Kilburn & Strode LLP
Lacon London
84 Theobalds Road
London WC1X 8NL (GB)

(54) GENERATION OF SYNTHETIC DATA

(57) Synthetic data may be used in place of an original dataset to avoid or mitigate disclosure risks pertaining to information of the original dataset. Synthetic data may be generated by optimizing a variable ordering used by a sequential tree generation method. The loss function used in optimizing may be based on a distinguishability between the source data and generated synthetic data.

200

FIG. 2

**Description**

**TECHNICAL FIELD**

The current application relates to the generation of synthetic data and in particular to the generation of synthetic data using sequential machine learning methods.

**BACKGROUND**

It is often difficult for analysts and researchers to get access to high quality individual-level data for secondary purposes (such as for building statistical and machine learning models) without having to obtain the consent of data subjects. Specific to healthcare data, a recent NAM/GAO report highlights privacy as presenting a data access barrier for the application of AI and machine learning in healthcare. In addition to possible concerns about the practicality of getting retroactive consent under many circumstances, there is significant evidence of consent bias.

For some datasets such as clinical trial data, the re-analysis of data from previous studies can provide new insights compared to the original publications, and has produced informative research results including on drug safety, evaluating bias, replication of studies, and meta-analysis. The most common purposes for secondary analyses of such are new analyses of the treatment effect and the disease state.

Anonymization is one approach for making clinical trial data available for secondary analysis. However, there have been repeated claims of successful re-identification attacks, eroding public and regulator trust in this approach.

To solve this problem, there is growing interest in using and disclosing synthetic data instead of anonymized trial data. There are many use cases where synthetic data can provide a practical solution to the data access problem. In fact, synthetic data is a key approach for data dissemination compared to more traditional disclosure control. Data synthesis provides a key privacy enhancing technology to enable data access to datasets addressing potential disclosure concerns.

Sequential decision trees are used quite extensively in the health and social sciences for the generation of synthetic data. With these types of models, a variable is synthesized by using the values earlier in the sequence as predictors. Compared to deep learning synthesis methods, sequential decision trees work well for small datasets, such as clinical trials. Sequential decision trees are one type of sequential machine learning methods that can be used for data synthesis.

It is desirable to have an additional, alternative and/or improved technique for generating synthetic data using sequential decision trees.

**SUMMARY**

In accordance with the present disclosure there is provided a method of generating synthetic data comprising: receiving a source dataset comprising a plurality of variables to be replaced by synthetic values determining initial hyperparameters for generation of synthetic data using a sequential synthesis method; generating a synthetic dataset using the sequential synthesis method based on the determined initial hyperparameters; optimizing the hyperparameters used for the synthetic dataset generation using a loss function; and generating an updated synthetic dataset using the optimized hyperparameters in the sequential synthesis method.

In a further embodiment of the method, the loss function is based on a distinguishability score between the source dataset and the generated synthetic dataset.

In a further embodiment of the method, the distinguishability score is computed as a mean square difference of a predicted probability from a threshold value.

In a further embodiment of the method, the distinguishability score is computed according to: $d = {}^1/_N \Sigma_i (p_i - 0.5)^2$ where: $d$ is the distinguishability score; $N$ is the size of the synthetic dataset; and $p_i$ is the propensity score for observation $i$.

In a further embodiment of the method, the loss function is a hinge loss function.

In a further embodiment of the method, the loss function is further based on one or more of: a univariate distance measure; a prediction accuracy value; an identity disclosure score; a computability score; and a utility score based on bivariate correlations.

In a further embodiment of the method, optimizing the hyperparameters comprises determining updated hyperparameters according to an optimization algorithm.

In a further embodiment of the method, the sequential synthesis method comprises at least one of: a sequential tree generation method; a linear regression method; a logistic regression method; a scalar vector machine (SVM) method and a neural network (NN) method.

In a further embodiment of the method, the generated synthetic dataset or the generated updated synthetic dataset is one of: a partially synthetic dataset and a fully synthetic dataset.

In a further embodiment of the method, the hyperparameters comprise a variable order used by the sequential synthesis method.

In a further embodiment of the method, the hyperparameters comprise: the number of observations in terminal nodes; or pruning criteria.

In a further embodiment of the method, the optimization algorithm comprises at least one of: particle swarm optimization; a differential evolution algorithm; and a genetic algorithm.

In a further embodiment of the method, the method further comprises outputting the synthetic dataset generated from the optimized variable ordering.

In a further embodiment of the method, the method further comprises: evaluating an identity disclosure risk of the synthetic dataset generated from the optimized variable ordering.

In accordance with the present disclosure there is further provided a non-transitory computer readable medium storing instructions, which when executed configure a computing system to perform a method comprising: receiving a source dataset comprising a plurality of variables to be replaced by synthetic values determining initial hyperparameters for generation of synthetic data using a sequential synthesis method; generating a synthetic dataset using the sequential synthesis method based on the determined initial hyperparameters; optimizing the hyperparameters used for the synthetic dataset generation using a loss function; and generating an updated synthetic dataset using the optimized hyperparameters in the sequential synthesis method.

In a further embodiment of the non-transitory computer readable medium, the loss function is based on a distinguishability score between the source dataset and the generated synthetic dataset.

In a further embodiment of the non-transitory computer readable medium, the distinguishability score is computed as a mean square difference of a predicted probability from a threshold value.

In a further embodiment of the non-transitory computer readable medium, the distinguishability score is computed according to: $d = \frac{1}{N} \sum_i (p_i - 0.5)^2$ where: $d$ is the distinguishability score; $N$ is the size of the synthetic dataset; and $p_i$ is the propensity score for observation $i$.

In a further embodiment of the non-transitory computer readable medium, the loss function is a hinge loss function.

In a further embodiment of the non-transitory computer readable medium, the loss function is further based on one or more of: a univariate distance measure; a prediction accuracy value; an identity disclosure score; a computability score; and a utility score based on bivariate correlations.

In a further embodiment of the non-transitory computer readable medium, optimizing the hyperparameters comprises determining updated hyperparameters according to an optimization algorithm.

In a further embodiment of the non-transitory computer readable medium, the sequential synthesis method comprises at least one of: a sequential tree generation method; a linear regression method; a logistic regression method; a scalar vector machine (SVM) method and a neural network (NN) method.

In a further embodiment of the non-transitory computer readable medium, the generated synthetic dataset or the generated updated synthetic dataset is one of: a partially synthetic dataset and a fully synthetic dataset.

In a further embodiment of the non-transitory computer readable medium, the hyperparameters comprise a variable order used by the sequential synthesis method.

In a further embodiment of the non-transitory computer readable medium, the hyperparameters comprise: the number of observations in terminal nodes; or pruning criteria.

In a further embodiment of the non-transitory computer readable medium, the optimization algorithm comprises at least one of: particle swarm optimization; a differential evolution algorithm; and a genetic algorithm.

In a further embodiment of the non-transitory computer readable medium, the method further comprises outputting the synthetic dataset generated from the optimized variable ordering.

In a further embodiment of the non-transitory computer readable medium, the method further comprises evaluating an identity disclosure risk of the synthetic dataset generated from the optimized variable ordering.

In accordance with the present disclosure there is further provided a computing system for generating synthetic data comprising: a processor for executing instruction; and a memory storing instructions, which when executed by the system configure the computing system to perform a method comprising: receiving a source dataset comprising a plurality of variables to be replaced by synthetic values determining initial hyperparameters for generation of synthetic data using a sequential synthesis method; generating a synthetic dataset using the sequential synthesis method based on the determined initial hyperparameters; optimizing the hyperparameters used for the synthetic dataset generation using a loss function; and generating an updated synthetic dataset using the optimized hyperparameters in the sequential synthesis method.

In a further embodiment of the computing system, the loss function is based on a distinguishability score between the source dataset and the generated synthetic dataset.

In a further embodiment of the computing system, the distinguishability score is computed as a mean square difference of a predicted probability from a threshold value.

In a further embodiment of the computing system, the distinguishability score is computed according to: $d = \frac{1}{N} \sum_i (p_i - 0.5)^2$ where: $d$ is the distinguishability score; $N$ is the size of the synthetic dataset; and $p_i$ is the propensity score for observation $i$.

In a further embodiment of the computing system, the loss function is a hinge loss function.

In a further embodiment of the computing system, the loss function is further based on one or more of: a univariate distance measure; a prediction accuracy value; an identity disclosure score; a computability score; and a utility score based on bivariate correlations.

In a further embodiment of the computing system, optimizing the hyperparameters comprises determining updated hyperparameters according to an optimization algorithm.

In a further embodiment of the computing system, the sequential synthesis method comprises at least one of: a sequential tree generation method; a linear regression method; a logistic regression method; a scalar vector machine (SVM) method and a neural network (NN) method.

In a further embodiment of the computing system, the generated synthetic dataset or the generated updated synthetic dataset is one of: a partially synthetic dataset and a fully synthetic dataset.

In a further embodiment of the computing system, the hyperparameters comprise a variable order used by the sequential synthesis method.

In a further embodiment of the computing system, the hyperparameters comprise: the number of observations in terminal nodes; or pruning criteria.

In a further embodiment of the computing system, the optimization algorithm comprises at least one of: particle swarm optimization; a differential evolution algorithm; and a genetic algorithm.

In a further embodiment of the computing system, the method further comprises outputting the synthetic dataset generated from the optimized variable ordering.

In a further embodiment of the computing system, the method further comprises evaluating an identity disclosure risk of the synthetic dataset generated from the optimized variable ordering.

## BRIEF DESCRIPTION OF THE DRAWINGS

Further features and advantages of the present disclosure will become apparent from the following detailed description taken in combination with the appended drawings, in which:

Fig. 1 depicts a system for generating synthetic data;

Fig. 2 depicts a method of generating synthetic data;

Fig. 3 depicts distinguishability scores for different trial datasets;

Fig. 4 depicts Hellinger values for different trial datasets; and

Fig. 5 depicts AUROC for different trial datasets.

## DETAILED DESCRIPTION

Sequential decision trees may be used for generating a synthetic dataset from a source dataset. For sequential data synthesis, variable order is important because each variable's generative model is fitted using only the variables before it in the order. Therefore, if the preceding variables are weak predictors of subsequent variables, the synthesized values will have low utility.

If the utility is dependent on variable order, then there would be nontrivial variation in the quality of synthesized data based on an arbitrary factor. In such a case, the optimal selection of variable order will ensure more consistent data utility results. One approach to address the problem is to synthesize many datasets based on random orders, then average the continuous values and use a majority vote for categorical values. However, this will not ensure that the data utility is adequate. Selecting the highest utility dataset among the random orders would also not ensure that the utility is optimal, and is an inefficient way to search for a dataset having good, or even acceptable, utility. It is possible to model the dependence among the variables and select the variable order accordingly. However, dependence does not imply directionality, which is important for selecting an order.

As described further below, it is possible to optimize the variable order used in synthesizing the data to meet data utility thresholds. The specific method described further below uses classification and regression trees (CART) in the generation of the synthetic data and the optimization uses a particle swarm method to select a variable order, however other sequential data synthesis techniques may be used such as linear regression or logistic regression, SVM, neural networks, among others, and other optimization methods may be used.

An empirical assessment of the impact of variable order on the utility of the synthetic data using a simulation performed with variable order randomly assigned for each iteration and the utility quantified using multiple metrics. The results indicate that sequential CART can result in nontrivial variation in the data utility of synthetic data. The exact amount of variation will depend on the dataset, but in some cases can be quite high. The particle swarm algorithm consistently ensured that a minimal data utility threshold was reached for every dataset, mitigating the data utility uncertainty caused by variable order. For simulations, the synthesis was repeated 1000 times, although a greater number of syntheses could be performed, for each dataset, and each time shuffling the variable order that was used in the sequential tree generation process. Specifically, a form of classification and regression trees called conditional inference trees were used to generate the synthetic data. For each iteration the synthetic data utility was estimated using techniques described further below.

The empirical assessment demonstrated that variable order has an impact on synthetic clinical trial data utility for a commonly used sequential method. The variable order may be optimized to provide a desired level of utility of the synthetic data.

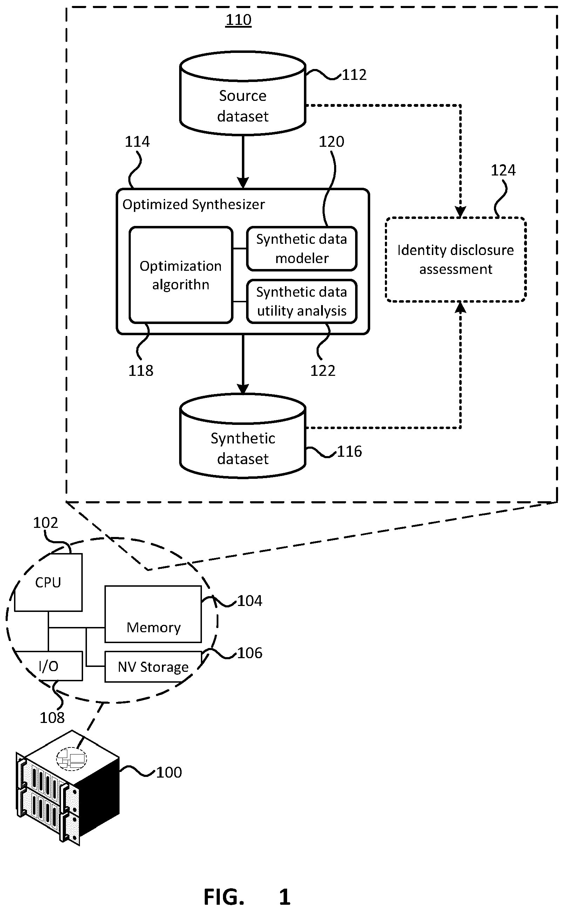

Fig. 1 depicts a system for generating synthetic data. One or more computing devices 100, which are depicted as servers although other computing devices may be used, are depicted as implementing the one or more of the components of a system for generating synthetic data and evaluating the identity disclosure risk of the synthetic data. It will be appreciated that different components may be implemented on separate servers that are communicatively coupled to each other. The servers, or other computing devices used in implementing the components depicted, may include one or more central processing units (CPU) 102, one or more memory units 104, one or more non-volatile storage units 106 and one or more input/output interfaces (108). The one or more memory units 104 have stored thereon instructions, which when executed by the one or more processing units 102 of the one or more servers 100 configure the one or more servers to provide functionality 110 for generating synthetic data.

The functionality includes a source dataset 112 that is used by optimized synthesizer functionality 214 in generating a synthetic dataset 116. The source dataset 112 is depicted as being provided by the system 100, however it could be provided from one or more remote computers in communication with the system 100. Similarly, the synthetic dataset 116 is depicted as being provided by the system 100, however may also be provided by one or more remote computers in communication with the system 100.

As depicted, the optimized synthesizer functionality 114 comprises an optimization algorithm 118, a synthetic data modeler 120 and synthetic data utility analysis functionality 122. The optimization algorithm 118 is used to determine a variable order used by the synthetic data modeler 120. The synthetic data modeler 120 uses the determined variable order to generate a synthetic dataset, which is evaluated by the synthetic data utility analysis functionality 122 in order to determine the utility of the generated synthetic data. The determined utility may be used by the optimization algorithm 118 to further optimize the variable order, which will again result in generation of a synthetic dataset by the modeler 120 using the new variable order. Once the optimization algorithm has completed, for example a set number of iterations has been completed, a threshold of utility has been reached or an improvement in utility across optimization iterations has reached a threshold, the synthetic dataset may be provided or output for further use. The optimization algorithm 118 may be for example particle swarm optimization and the modeler 120 may use a form of classification and regression trees called conditional inference trees, although other synthesis and optimization techniques may be used.

The functionality 110 may optionally include identity disclosure assessment functionality 124 which determines a potential disclosure risk for synthetic data generated from a source dataset. Details of the identity disclosure assessment functionality is described in further detail in US Provisional Patent Application 63/012,447 filed April 20, 2020 and entitled "Systems and Method for Evaluating Identity Disclosure Risks In Synthetic Personal Data," the entirety of which is incorporated herein by reference for all purposes.

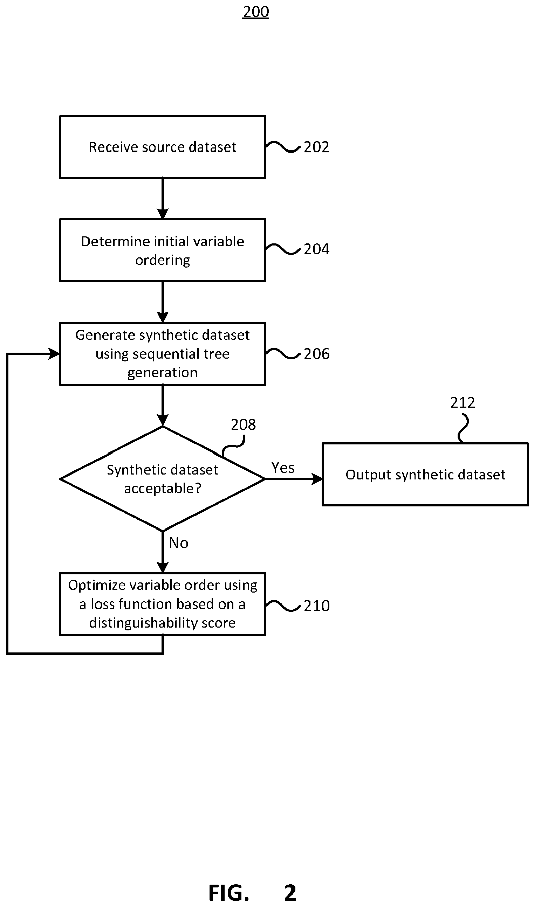

Fig. 2 depicts a method of generating synthetic data. The method 200 receives a source dataset (202). The source dataset comprises a plurality of variables that may be considered sensitive and so their values are replaced with synthesized values in the synthetic data. The source dataset may also include non-sensitive variables, the values of which may be included directly in the synthetic dataset from the source dataset to provide a partially synthetic dataset. If all of the variables of a source dataset are considered sensitive, or if the non-sensitive variables are also replaced with synthetic data, the resultant synthetic dataset will be a fully synthetic dataset. Once the source dataset is received, an initial variable ordering is determined (204). The initial variable ordering may be determined as a random ordering of the sensitive variables. It is possible to determine the initial variable ordering in other ways, including based on an initial evaluation of the source dataset, a similarity of the source dataset variables to other previously processed datasets or in other ways. Once the initial variable ordering is determined, it is used to generate a synthetic dataset using sequential tree generation techniques (206) and the synthetic dataset evaluated to determine if it is acceptable (208). The utility of the synthetic dataset may be determined based on a distinguishability score as described further below. If the utility is not acceptable (No at 208), the variable order is optimized using a loss function based on a distinguishability score (210) and the optimized variable order used to generate a subsequent synthetic dataset. If the synthetic dataset is acceptable (Yes at 208), or if other stopping criteria of the optimization are reached, the synthetic dataset may be output (212).

Three metrics were used to evaluate the utility of the synthetic datasets: comparisons of univariate distributions, prediction accuracy, and distinguishability. Although three metrics are described below, additional, or fewer, metrics may be used to evaluate the utility, or usefulness, of the generated synthetic data. The comparison of univariate distributions as a utility metric is common in the synthesis literature. The comparison of prediction models has been used, for example, to compare the prediction of hospital readmissions between real and synthetic data.

The univariate distributions between the real and synthetic datasets on all variables were first computed. The Hellinger distance was used for this purpose. This has been shown to behave in a consistent manner as other distribution comparison metrics when comparing original and transformed data in the context of evaluating disclosure control methods, but it has the advantage of being bounded between zero and one, which makes it easier to interpret. The median Hellinger distance was computed across all variables for each iteration during simulations of the synthetic data generation.

The second metric was a measure of multivariate prediction accuracy. It provides an indication of the extent to which the prediction accuracy of synthetic data models is the same as the models from the real data. General boosted regression models were built, taking each variable as an outcome to be predicted by all of the other variables. Hence all multivariate models were built for the synthetic and real datasets. For each model, 10-fold cross validation was used to compute the area under the receiver operating characteristic curve (AUROC) as a measure of model accuracy. The synthetic data and the real data accuracy were then compared by computing the absolute difference in the median AUROC measures for each dataset in the simulations. The choice of median was to avoid a single or very small number of models over-influencing the central tendency measure.

The third utility metric is based on propensity scores. The basic idea is similar to the use of a binary classifier to perform a test to compare two multivariate distributions. The real and synthetic datasets are pooled, and a binary indicator is assigned to each record depending on whether it is a real data record or a synthetic data record. A binary classification model is then constructed to distinguish between the real and synthetic records. A ten-fold cross-validation is used to compute the propensity score. The specific classification technique used is generalized boosted models.

The distinguishability score is computed as the mean square difference of the predicted probability from a threshold value which is depicted as 0.5 below, which is the value where it is not possible to distinguish between the two datasets:

$$d = \frac{1}{N} \sum_{i} \left( p_i - 0.5 \right)^2$$

(1)

where $N$ is the size of the synthetic dataset, and $p_i$ is the propensity score for observation $i$.

If the two datasets are the same then there will be no distinguishability between them - this is when the synthetic data generator was overfit and effectively recreated the original data. In such a case the propensity score of every record will be close to or at 0.5, in that the classifier is not able to distinguish between real and synthetic data, and $d$ approaches zero. If the two datasets are completely different, then the classifier will be able to distinguish between them. In such a case the propensity score will be either zero or one, with $d$ approaching 0.25.

Across all 1000 simulation runs of the empirical assessment, the median and 95% confidence interval on each dataset was examined for the three utility metrics (the 2.5 percentile and the 97.5 percentile). This will indicate how stable the utility of the datasets are as the variable order is modified.

Because the generation of synthetic data is stochastic, there can be confounding variability in the utility metrics due to the synthesis process itself. Therefore, this was averaged out by generating 50 synthetic datasets for each of the 1000 variable orders, computing the utility metrics, and taking the average of these 50 values to represent the value for that variable order. That way it is possible to factor out the impact of the stochastic synthesis process from the variability that is measured

The above utility metrics may be used in optimizing the variable order. The optimization may use a particle swarm algorithm although other optimization algorithms may be used such as differential evolution algorithms, genetic algorithms, or other optimization algorithms that do not require a continuous and differential function. The particle swarm algorithm uses a search heuristic to find the global optimum without requiring the objective function to be continuous. For the objective function the distinguishability was computed and a hinge loss function used that was being minimized. The hinge loss considers the distinguishability to be zero if it is below 0.05. This threshold was used as it is undesirable to overfit the generated trees to the data. The overall loss is therefore:

$$loss = \max\left(0, d - 0.05\right)$$

(2)

A hinge loss can be computed for the Hellinger distance, or other univariate distance measure, and the AUROC value, or other prediction accuracy value, and an overall loss computed as the unweighted sum of all three losses:

$$loss = \max\left(0, d - 0.05\right) + \max\left(0, h - 0.1\right) + \max\left(0, a - 0.1\right)$$

(3)

where $h$ is the Hellinger distance and $a$ is the AUROC absolute median difference. In the analysis the results with the loss function of (3) were similar for the simpler loss function of (2).

While the above describes using a loss function based on distinguishability metrics for the optimization, it is possible to include other criteria in the optimization, including for example disclosure risk considerations, computation considerations, etc.

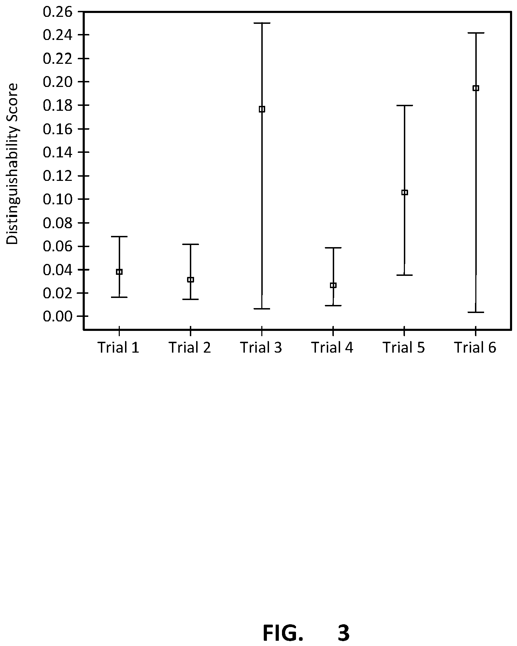

Figs. 3 - 5 present three graphs showing the different utility scores across six trial datasets set forth in Table 1 below. Simulations were performed on six different oncology clinical trial datasets from Project Data Sphere as summarized below. The datasets vary in size and the types of variables, which would allow a broader generalization of the results. Only the screening criteria, demographics variables, baseline characteristics, and the endpoints in this analysis were considered.

Table 1: Table of trial datasets

| Dataset | # Individuals | # Variables |
|---|---|---|
| **Trial #1 (NCT00041197)** | | |
| This trial was designed to test if post-surgery receipt of imatinib could reduce the recurrence of Gastrointestinal stromal tumors (GIST). Imatinib is an FDA approved protein-tyrosine kinase inhibitor that is approved for treating certain cancers of the blood cells. This drug is hypothesized to be effective against GIST as imatinib inhibits the kinase which experiences gain of function mutations in up to 90% of GIST patients. At the time of this trial the efficacy of imatinib for GIST as well as the optimal dosage for treatment of GIST was unknown. | 773 | 129 |
| **Trial #2 (NCT01124786)** | | |
| Pancreatic cancer has an estimated annual incidence of 45,000 in the United States, with 38,000 of those diagnosed dying from the disease. Most patients have advanced inoperable disease and potentially metastases (i.e., metastatic pancreatic adenocarcinoma or MPA). At the time of this trial the first line therapy for patients with inoperable disease was gemcitabine monotherapy, although this treatment does not benefit all patients. One transporter (hENT1: human equilibrative nucleoside transporter-1) has been identified as a potential predictor of successful treatment via gemcitabine. In a study by Giovannetti and colleagues, patients with low expression of hENT1 had the poorest survival when receiving gemcitabine-based therapy [34]. This trial compares standard gemcitabine therapy to a novel fatty acid derivative of gemcitabine, called CO-1.01. CO-1.01 is hypothesized to be superior to gemcitabine in MPA patients with low hENT1 activity as it exhibits anticancer activity independent of nucleoside transporters like hENT1while gemcitabine seems to require nucleoside transporters for anticancer activity. | 367 | 88 |

(continued)

| Trial #3 (NCT00688740) | | |
|---|---|---|
| This phase 3 trial compares adjuvant anthracycline chemotherapy (fluorouracil, doxorubicin, and cyclophosphamide) with anthracycline taxane chemotherapy (docetaxel, doxorubicin, and cyclophosphamide) in women with lymph node positive early breast cancer. In total there were 746 control group patients in the trial and follow-up data is available for 10 years after trial initiation. | 746 | 239 |
| **Trial #4 (NCT00113763)** | | |
| This was a randomized Phase 3 trial examining whether panitumumab, when combined with best supportive care, improves progression-free survival among patients with metastatic colorectal cancer, compared with those receiving best supportive care alone. Patients included in the study had failed other chemotherapy options available at the time of the study. Participants were enrolled between 2004 and 2005. | 463 (sponsor only provided 370 in the data set) | 59 |
| **Trial #5 (NCT00460265)** | | |
| Similar to Trial #4, this was also a randomized Phase 3 trial on panitumumab, but among patients with metastatic and/or recurrent squamous cell carcinoma (or its variants) of the head and neck. The treatment group received panitumumab in addition to other chemotherapy (Cisplatin and Fluorouracil), while the control group received Cisplatin and Fluorouracil as first line therapy. Participants were enrolled between 2007 and 2009. | 657 (sponsor only provided 520 in the dataset) | 401 |
| **Trial #6 (NCT00119613)** | | |
| This was a randomized and blinded Phase 3 trial aimed at evaluating whether "increasing or maintaining hemoglobin concentrations with darbepoetin alfa" improves survival among patients with previously untreated extensive-stage small cell lung cancer. The treatment group received darbepoetin alfa with platinum-containing chemotherapy, whereas the control group received placebo instead of darbepoetin alfa. | 600 (sponsor only provided 479 in the dataset) | 381 |

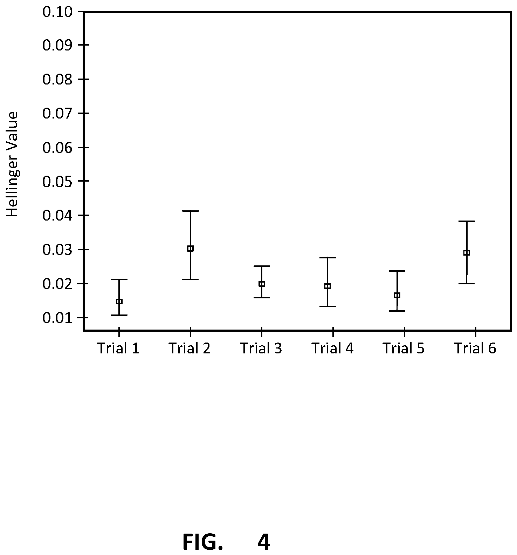

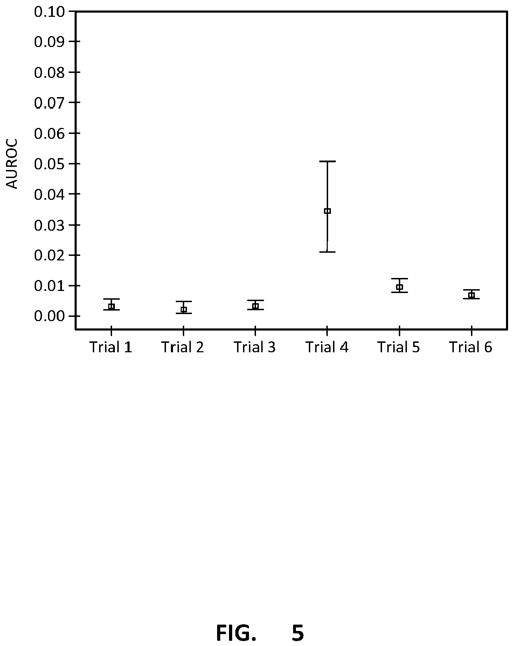

In Fig. 3 it is possible to see the nontrivial variation in the distinguishability score. Specifically, trials 3, 5, and 6 show a large amount of variation due to variable order. Fig. 4 shows the results across the six trials for the Hellinger distance. While there is a little bit of variation, in general the distance was relatively low and the variation within a narrow range. Fig. 5 has the results for the multivariate prediction models with the AUROC accuracy results. Although trial 4 has the most variation, that tended to be in a narrow range as well.

The differences among the three utility metrics are not surprising since they are measuring different things, and they are also influenced by outliers differently. However, it is clear that the larger the number of variables in the dataset, the greater the variability in the distinguishability score.

After optimization the results are shown in Table 2, which provides the utility results after the optimal variable order was selected. As can be seen, variable orders that have high utility were selected in every case.

Table 2: Table of utility results after the optimal variable order was selected.

| Study | Distinguishability | Hellinger | AUROC |
|---|---|---|---|
| Trial 1 | 0.011 | 0.0118 | 0.0019 |
| Trial 2 | 0.033 | 0.027 | 0.001 |
| Trial 3 | 0.049 | 0.017 | 0.0026 |
| Trial 4 | 0.02 | 0.0204 | 0.0584 |
| Trial 5 | 0.044 | 0.0135 | 0.0118 |
| Trial 6 | 0.0388 | 0.0277 | 0.009 |

The results indicate that the variation in the data utility of synthesized clinical trials was impacted by the variable order, after accounting for natural variation due to the stochastic nature of data synthesis. In some cases the utility variation was pronounced, meaning that some orders will result in poor utility results, at least on some of the key utility metrics.

The optimization reliably found the variable orders that ensures the utility metrics are below an acceptable threshold level. Since it will not be possible to know a priori whether a particular clinical trial dataset will have high sensitivity to variable order, the optimization of variable order should be performed every time a clinical trial dataset is synthesized using sequential trees.

The same framework can be used to select and optimize the hyperparameters for the sequential synthesis methods beyond just the variable order, such as minimal bin size and tree pruning criteria. Furthermore, hyperparameter selection can have an impact on the identity disclosure risks in the synthetic data. This means that the objective function being optimized can include disclosure risk as well. This allows simultaneous optimization on utility and privacy.

The above has described systems and methods that may be useful in generating synthetic data. The methods are implemented on a computer system. Particular examples have been described with reference to clinical trial data. It will be appreciated that, while synthetic data generation may be important in the health and research fields, the above also applies to generating synthetic data in other domains.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope.

**Claims**

1.   A computer-implemented method of generating synthetic data comprising:

> receiving a source dataset comprising a plurality of variables to be replaced by synthetic values
> determining initial hyperparameters for generation of synthetic data using a sequential synthesis method;
> generating a synthetic dataset using the sequential synthesis method based on the determined initial hyperparameters;
> optimizing the hyperparameters used for the synthetic dataset generation using a loss function; and
> generating an updated synthetic dataset using the optimized hyperparameters in the sequential synthesis method.

2.   The computer-implemented method of claim 1, wherein the loss function is based on a distinguishability score between the source dataset and the generated synthetic dataset.

3. The computer-implemented method of claim 2, wherein the distinguishability score is computed as a mean square difference of a predicted probability from a threshold value.

4. The computer-implemented method of claim 3, wherein the distinguishability score is computed according to:

$$d = \frac{1}{N} \sum_i (p_i - 0.5)^2$$

where:

    $d$ is the distinguishability score;
    $N$ is the size of the synthetic dataset; and
    $p_i$ is the propensity score for observation $i$.

5. The computer-implemented method of any one of claims 2 to 4, wherein the loss function is a hinge loss function.

6. The computer-implemented method of claim 5, wherein the loss function is further based on one or more of:

    a univariate distance measure;
    a prediction accuracy value;
    an identity disclosure score;
    a computability score; and
    a utility score based on bivariate correlations.

7. The computer-implemented method of any one of claims 1 to 6, wherein optimizing the hyperparameters comprises determining updated hyperparameters according to an optimization algorithm.

8. The computer-implemented method of any one of claims 1 to 7, wherein the sequential synthesis method comprises at least one of:

    a sequential tree generation method;
    a linear regression method;
    a logistic regression method;
    a scalar vector machine (SVM) method and
    a neural network (NN) method.

9. The computer-implemented method of any one of claims 1 to 8, wherein the generated synthetic dataset or the generated updated synthetic dataset is one of: a partially synthetic dataset and a fully synthetic dataset.

10. The computer-implemented method of any one of claims 1 to 9, wherein the hyperparameters comprise a variable order used by the sequential synthesis method.

11. The computer-implemented method of any one of claims 1 to 10, wherein the hyperparameters comprise:

    the number of observations in terminal nodes; or
    pruning criteria.

12. The computer-implemented method of any one of claims 1 to 11, wherein the optimization algorithm comprises at least one of:

    particle swarm optimization;
    a differential evolution algorithm; and
    a genetic algorithm.

13. The computer-implemented method of any one of claims 1 to 12, further comp rising outputting the synthetic dataset generated from the optimized variable ordering.

14. The computer-implemented method of any one of claims 1, further comprising: evaluating an identity disclosure risk of the synthetic dataset generated from the optimized variable ordering.

15. A non-transitory computer readable medium storing instructions, which when executed configure a computing system to perform a computer-implemented method according to any one of claims 1 to 14.

16. A computing system for generating synthetic data comprising:

a processor for executing instruction; and
a memory storing instructions, which when executed by the system configure the computing system to perform a method according to any one of claims 1 to 14.

**110**

Source dataset — 112

114        120

Optimized Synthesizer

Optimization algorithn

Synthetic data modeler

Synthetic data utility analysis

118        122

124

Identity disclosure assessment

Synthetic dataset — 116

102

CPU

Memory — 104

I/O

NV Storage — 106

108

100

**FIG.    1**

200

```
┌─────────────────────────────┐
│    Receive source dataset    │~~202
└─────────────────────────────┘
              │
              ▼
┌─────────────────────────────┐
│  Determine initial variable  │~~204
│          ordering            │
└─────────────────────────────┘
              │
              ▼
┌─────────────────────────────┐
│  Generate synthetic dataset  │~~206
│   using sequential tree      │
│        generation            │
└─────────────────────────────┘
              │
              ▼                         212
          ╱╲  208                        ╲
        ╱      ╲                  ┌──────────────────────────┐
      ╱ Synthetic ╲     Yes       │                          │
     ╱  dataset     ╲────────────▶│  Output synthetic dataset │
      ╲ acceptable? ╱             │                          │
        ╲        ╱                └──────────────────────────┘
          ╲    ╱
            ╲╱
            │ No
            ▼
┌─────────────────────────────┐
│ Optimize variable order using│~~210
│ a loss function based on a   │
│   distinguishability score   │
└─────────────────────────────┘
```

# FIG.    2

FIG.    3

**FIG. 4**

FIG.    5

Europäisches
Patentamt
European
Patent Office
Office européen
des brevets

**EUROPEAN SEARCH REPORT**

Application Number

EP 21 17 7118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DRECHSLER JÖRG ET AL: "An empirical evaluation of easily implemented, nonparametric methods for generating synthetic datasets", COMPUTATIONAL STATISTICS AND DATA ANALYSIS, vol. 55, no. 12, 1 December 2011 (2011-12-01), pages 3232-3243, XP055854523, NL ISSN: 0167-9473, DOI: 10.1016/j.csda.2011.06.006 * the whole document * | 1-16 | INV. G06N5/00 G06N20/10 |
| A | GONCALVES EDUARDO CORREA ET AL: "A Genetic Algorithm for Optimizing the Label Ordering in Multi-label Classifier Chains", 2013 IEEE 25TH INTERNATIONAL CONFERENCE ON TOOLS WITH ARTIFICIAL INTELLIGENCE, IEEE, 4 November 2013 (2013-11-04), pages 469-476, XP032564761, ISSN: 1082-3409, DOI: 10.1109/ICTAI.2013.76 [retrieved on 2014-02-07] * the whole document * | 1-16 | |
| A | JESSE READ ET AL: "Classifier Chains: A Review and Perspectives", ARXIV.ORG, CORNELL UNIVERSITY LIBRARY, 201 OLIN LIBRARY CORNELL UNIVERSITY ITHACA, NY 14853, 15 April 2020 (2020-04-15), XP081878624, DOI: 10.1613/JAIR.1.12376 * the whole document * | 1-16 | TECHNICAL FIELDS SEARCHED (IPC)<br><br>G06N |

-/--

The present search report has been drawn up for all claims

| Place of search | Date of completion of the search | Examiner |
|---|---|---|
| The Hague | 8 November 2021 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 17 7118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DANDEKAR ASHISH ET AL: "A Comparative Study of Synthetic Dataset Generation Techniques", 9 August 2018 (2018-08-09), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 387 - 3, XP047482891, ISBN: 978-3-642-17318-9 [retrieved on 2018-08-09] * the whole document * | 1-16 | |
| A | GILLIAN M RAAB ET AL: "Guidelines for Producing Useful Synthetic Data", ARXIV.ORG, CORNELL UNIVERSITY LIBRARY, 201 OLIN LIBRARY CORNELL UNIVERSITY ITHACA, NY 14853, 12 December 2017 (2017-12-12), XP080842633, * the whole document * | 1-16 | TECHNICAL FIELDS SEARCHED (IPC) |

The present search report has been drawn up for all claims

| Place of search | Date of completion of the search | Examiner |
|---|---|---|
| The Hague | 8 November 2021 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 923 210 A1**

**REFERENCES CITED IN THE DESCRIPTION**

**Patent documents cited in the description**

- US 63012447